# EUROPÄISCHE PATENTANMELDUNG

(11) **EP 0 921 412 A2**
(43) Veröffentlichungstag der Anmeldung: **09.06.1999**
(21) Anmeldenummer: 98121609.6
(22) Anmeldetag: 12.11.1998
(51) Int. Cl.: G01S 13/04, G01S 13/88, G01S 7/04, A63B 29/02

(54) **Verschüttetensuchgerät**

(30) Priorität: 28.11.1997 DE 19752939
(71) Anmelder: Kampel, Gerald, 82019 Taufkirchen (DE)
(72) Erfinder: Kampel, Gerald, 82019 Taufkirchen (DE)
(74) Vertreter: Vogeser, Werner, Dipl.-Ing.

(57) **Zusammenfassung**

Die Erfindung betrifft ein mittels Gurt tragbares Verschüttetensuchgerät, insbesondere für die Suche nach Lawinenverschütteten, aufweisend eine Empfangsschaltung mit einem Sender, der ein gepulstes, elektromagnetisches Feld aussendet, und mit einem Empfänger zum Empfang der Sendeimpulse, wobei die Einschaltung des Geräts mittels eines eines Gurtsteckers beim Anlegen des Gurtes automatisch erfolgt, sowie mit einer Auswerteschaltung, die in Abhängigkeit von der Empfangsfeldstärke akustische und optische Anzeigemittel ansteuert sowie weiterhin mit einer mittels Schalter umschaltbaren Bereichsumschaltung für unterschiedliche Empfindlichkeitsbereiche der Empfangsfeldstärke, bei dem zum schnellen, sicheren und genauen Auffinden eines Verschütteten vorgeschlagen wird, daß die optischen Anzeigemittel der Empfangsfeldstärke aus einer Menüanzeige bestehen, die aufweist:
ein Display mit einem einzigen, als Bargraph ausgebildeten Pfeilsymbol (12) mit Entfernungsunterteilung in Form von Balken, die der Empfangsfeldstärke entsprechen, wobei die beim Orten empfangene maximale Feldstärke gespeichert und zusätzlich als Feldlinienlänge digital angezeigt wird und beim Verlassen der Richtung maximaler Feldstärke erlischt, mit einem Richtungsneuorientierungssymbol (21), das so lange angezeigt wird, bis die maximale Feldstärke wieder empfangen wird, und mit einem Bereichsumschaltungssymbol (22), das angezeigt wird, wenn eine Umschaltung des Bereichsumschalters (16) erforderlich ist.

## Beschreibung

Die Erfindung betrifft ein Verschüttetensuchgerät entsprechend dem Oberbegriff des Anspruchs 1.

Derartige Geräte sind z.B. aus der DE 35 31 726 A1, DE 30 46 895 C2 und OE 39 15 62 bekannt. Diese Geräte arbeiten in der Regel nach dem Lautstärkenprinzip, d.h., daß die Empfangsfeldstärke in ein akustisches Signal umgewandelt wird, das sich bei Annäherung an einen Verschütteten verstärkt. Zusätzlich kann die Empfangsfeldstärke mittels eines Feldstärkenanzeigers in Form von Leuchtdioden sichtbar gemacht werden.

Bei den bekannten Verschüttetensuchgeräten besteht eine Schwierigkeit darin, daß keine direkte Richtungsanzeige zu einem Verschütteten erhalten wird. Es ist auch möglich (DE 195 10 875), über mehrdimensionale, z.B. zwei- bzw. dreidimensionale Antennen Sendesignale zu senden, die beim Empfänger über einen Mikroprozessor den direkten Weg zum Verschütteten errechnen und auf einem Display sowohl als Pfeil ("elektronischer Kompass") als auch als digitale Meterangabe zur Anzeige bringen. In der Praxis ergeben sich jedoch bei solchen Geräten wegen der geometrischen Anordnung der Antennen Schwierigkeiten, da einerseits eine dreidimensionale Kreuzantenne ein kugelförmiges Gehäuse benötigt, und andererseits die entstehenden elektromagnetischen Felder wegen der unterschiedlichen Antennenlänge und der Lageabhängigkeit von Dipol- bzw. Ferritantennen nicht eindeutig berechenbar sind. Allein durch die Lageabhängigkeit eines Dipols können sich Feldstärkenunterschiede bei gleicher Entfernung von 1:5 ergeben.

Der Erfindung liegt daher die Aufgabe zugrunde, ein Verschüttetensuchgerät zu schaffen, das es auch nicht speziell ausgebildeten Personen ermöglicht, eine schnelle, sichere und genaue Ortung eines Verschütteten durchzuführen.

Gelöst wird diese Aufgabe gem. der Erfindung durch die im kennzeichnenden Teil des Anspruchs 1 angegebenen Merkmale. Zweckmäßige Ausgestaltungen der Erfindung ergeben sich aus den Unteransprüchen.

Mittels der auf dem Display je nach Lage des Geräts angezeigten Symbole kann ein Suchender einfach, schnell und sicher die Ortung eines Verschütteten durchführen. Die Orientierung des Gerätes und die Umschaltung der Bereiche kann von der das Gerät tragenden Person, aber auch automatisch erfolgen, wenn das Gerät z.B. drehbar auf einer Grundplatte angeordnet und die Orientierung und Umschaltung mittels eines in Abhängigkeit von der Empfangsfeldstärke gesteuerten Motors durchgeführt werden.

Die Erfindung wird nachstehend anhand der Fig. 1 - 9 beispielsweise erläutert. Es zeigt:
- Fig. 1: eine Aufsicht des Gerätes gem. der Erfindung,
- Fig. 2: die Rückansicht des Gerätes, und
- Fig. 3: das Display des Gerätes der Fig. 1 und 2 mit allen möglichen Anzeigen,
und
- Fig. 4 - 9: das Display des Gerätes in verschiedenen Ortungsphasen.

Das Verschüttetensuchgerät gem. der Erfindung ist mit einer nicht gezeigten, aus dem Stand der Technik bekannten Schaltung ausgestattet, die ein Sende- und ein Empfangsteil aufweist, die mittels einer Dipolantenne wahlweise Impulssignale einer bestimmten Frequenz senden und empfangen können.

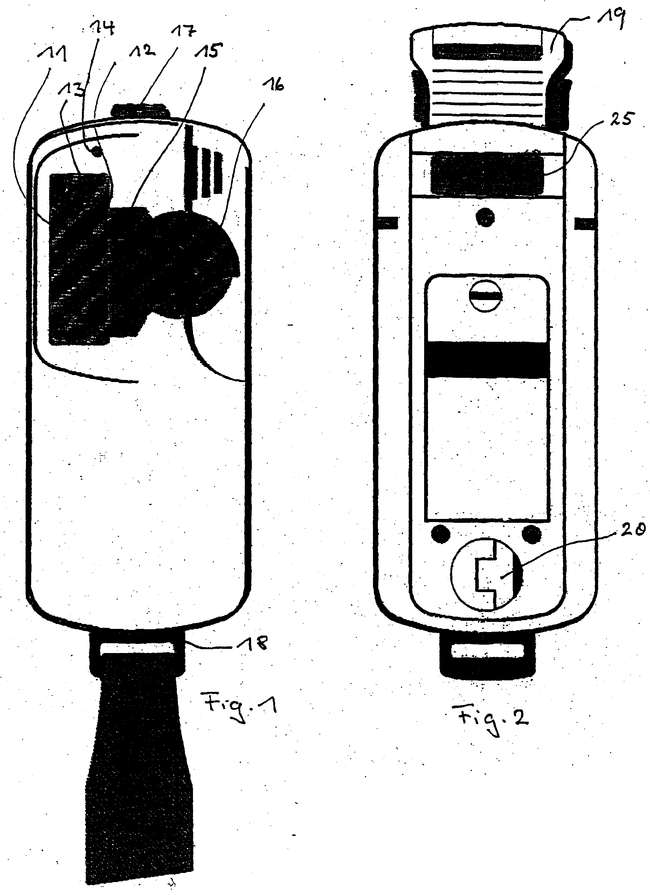

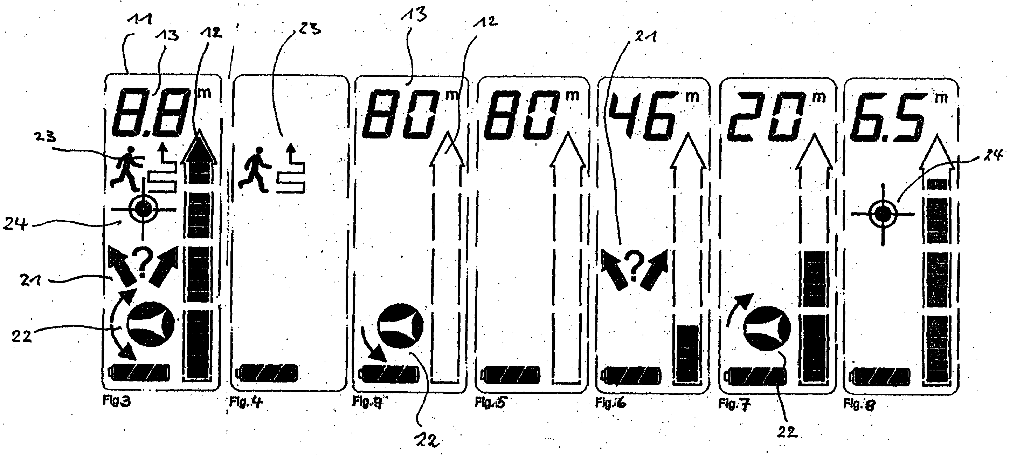

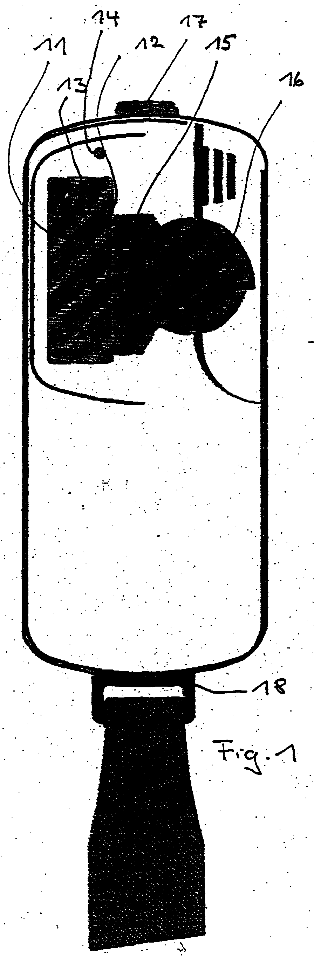

Das Gerät kann mittels eines Gurtes am Körper getragen werden. An den beiden Gurtenden befinden sich Gurtstecker 18, 19, denen bestimmte Funktionen zugeordnet sind. Wenn beide Gurtstecker 18, 19 eingesteckt sind, befindet sich das Gerät automatisch auf Sendebetrieb. Die Einschaltung des Geräts erfolgt mittels des Gurtsteckers 18. Das Lösen des Gurtsteckers 18 ist nur möglich, wenn eine in Fig. 2 gezeigte, spezielle Arretierung 20 gelöst wird. Diese Arretierung kann z.B. durch Hochklappen einer Klappe und Drehen eines Auslöseelements gelöst werden. Dadurch wird ein unbeabsichtigtes Lösen des Gurtsteckers 18 vermieden. Die Arretierung 20 dient auch dazu, das Gerät einzuschalten, wenn kein Gurt verwendet wird.

Um das Gerät für die Ortung eines Verschütteten zu benutzen, wird der mit einem Bajonettverschluß betätigbare Gurtstecker 19 abgezogen. Das Gerät befindet sich dann automatisch auf Empfangsbetrieb.

Das Gerät kann auch ohne Gurt durch Aufbewahrung in einer verschließbaren Tasche eines Kleidungsstückes im Sendebetrieb arbeiten. Nach Abziehen beider Gurtstecker 18, 19 ist das Gerät ausgeschaltet und kann, wie zuvor erwähnt, durch die Arretierung 20 eingeschaltet werden. Ohne den Gurtstecker 19 befindet sich das Gerät dann automatisch im Empfangsbetrieb und kann durch eine durch den Gurtstecker 19 freigegebene Taste 17 auf Sendebetrieb umgeschaltet werden. Vom Sendebetrieb kann mittels eines in Fig. 2 gezeigten zweiteiligen Schiebeschalters 25 vom Sende- wieder auf Empfangsbetrieb umgeschaltet werden.

Aufbau- und Arbeitsweise des Gerätes werden nun anhand eines Such- bzw. Ortungsvorganges erläutert.

Angenommen, das Gerät wurde durch Ziehen des Gurtsteckers 19 auf Empfangsbetrieb umgeschaltet, erscheint, wenn noch kein Signal empfangen wird, in einem LC-Display 11 ein Grobsuchsymbol 23. Für den Beginn der Ortung muß ein Bereichsschalter 16 auf Start eingestellt werden, dem untersten, empfindlichsten Bereich von mehreren Empfangs- bzw. Empfindlichkeitsmeßbereichen 15. Ist dies nicht der Fall erscheint ein Bereichsumschaltungssymbol 22, und dann ein in unterbrochenen Linien angezeigtes Pfeilsymbol 12 sowie eine Entfernungsanzeige 13, die auf eine maximal mögliche Ortungsentfernung von 80 m eingestellt ist. Dies gilt, falls noch kein Signal empfangen wird. Wird bereits ein Signal empfangen, erscheint das Pfeilsymbol 12, und, falls sich der Bereichsumschalter 16 im richtigen Bereich befindet, kann mit der Ortung begonnen werden.

Das Pfeilsymbol 12 ist ein Bargraph in Form einer LCD-Anzeige mit querliegenden Balken in der Form eines Balken- bzw. Säulendiagramms. Das Pfeilsymbol 12 ist in einzelne Bereiche entsprechend den Bereichen 15 des Bereichsumschalters 16 unterteilt. Diese Bereiche füllen sich bei Annäherung an einen Verschütteten mit Balken. Es ist jedoch auch möglich, ein Pfeilsymbol zu verwenden, das sich entsprechend einem Bereich des Bereichsumschalters 16 mit Balken füllt und bei Umschaltung ein neuer Füllvorgang beginnt.

Die digitale Entfernungsanzeige 13 gibt die Feldlinienlänge zwischen dem Suchenden und einem Verschütteten in Metern an, d.h., es wird nicht die kürzeste Entfernung zwischen dem Ortungsgerät und dem Gerät eines Verschütteten angezeigt, sondern die sich zwischen den beiden Geräten ergebenden Feldlinienlänge.

Wird das Gerät fehlausgerichtet, d.h., daß eine geringere Feldstärke empfangen wird, wird das Richtungsneuorientierungssymbol 21 angezeigt. Die Entfernungsanzeige erlischt, die zuvor ermittelte minimale Länge bei maximaler Empfangsfeldstärke wird jedoch vorzugsweise einige Minuten gespeichert, und die minmale Entfernung wird wieder angezeigt, sobald die entsprechende Orientierung wieder erreicht ist.

Sollte sich nach einer Neuorientierung ein höherer Maximalwert der Empfangsfeldstärke ergeben, wird der vorherige Wert gelöscht und der neue gespeichert, gleichzeitig wird die neue Entfernung angezeigt.

Sobald die Balken des Pfeilsymbols 12 einem einen entsprechenden Bereich 15 des Bereichsumschalters 16 entsprechenden Bereich gefüllt haben, erscheint wieder das Umschaltsymbol 22 (Fig. 7), um anzuzeigen, daß der Schalter 16 in den nächsten Bereich geschaltet werden muß. Gegen Ende des Suchvorgangs erscheint das Punktsuchsymbol 24, das anzeigt, daß nun eine unmittelbare Annäherung an den Verschütteten erfolgt ist und der bekannte Punktsuchvorgang durchgeführt werden muß.

Bei allen Symbolen, die eine Neuorientierung des Gerätes erforderlich machen, erfolgt gleichzeitig eine Alarmanzeige 14 (Fig. 1). Dies geschieht vorzugsweise bei Anzeige des Richtungsneuorientierungssymbols 21, des Umschaltsymbols 22, des Punktsuchsymbols 24 und, wenn die digitale Anzeige erlischt. Die zuvor erwähnte Speicherung der maximalen Empfangsfeldstärke wird selbstverständlich bei Ausschalten des Gerätes und beim Umschalten von Empfangs- auf Sendebetrieb gelöscht. Beim Zurückschalten auf einen niedrigeren Bereich mittels des Bereichsumschalters 16 wird dieser Maximalwert ebenfalls gelöscht, gleichzeitig erfolgt jedoch die Anzeige des Richtungsneuorientierungssymbols 21.

Die Darstellung von Symbolen auf dem Display 11 hat den wesentlichen Vorteil, daß der Suchvorgang zwangsläufig richtig durchgeführt werden kann. Dies ist ein weiterer Vorteil gegenüber dem Stand der Technik, bei dem entsprechend bestehenden Vorschriften eine Kurzbedienungsanleitung auf die Rückseite des Gerätes gedruckt ist.

Um ein Verlieren des Gerätes während des Suchvorgangs zu vermeiden, kann der Gurt im Bereich der Gurthälfte, an der der Gurtstecker 19 befestigt ist, eine Schultergurtschlaufe aufweisen, so daß das Gerät dann zwischen dieser Schultergurtschlaufe und dem Schultergurtstecker 18 gesichert ist.

## Patentansprüche

1. Mittels Gurt tragbares Verschüttetensuchgerät, insbesondere für die Suche nach Lawinenverschütteten, aufweisend eine Empfangsschaltung mit einem Sender, der ein gepulstes, elektromagnetisches Feld aussendet, und mit einem Empfänger zum Empfang der Sendeimpulse, wobei die Umschaltung auf Sendebetrieb mittels eines Gurtsteckers beim Anlegen des Gurtes automatisch erfolgt, sowie mit einer Auswerteschaltung, die in Abhängigkeit von der Empfangsfeldstärke akustische und optische Anzeigemittel ansteuert sowie weiterhin mit einer mittels Schalter umschaltbaren Bereichsumschaltung für unterschiedliche Empfindlichkeitsbereiche der Empfangsfeldstärke,
**dadurch gekennzeichnet, daß**
die optischen Anzeigemittel der Empfangsfeldstärke aus einer Menüanzeige bestehen, die aufweist:
ein Display
mit einem einzigen, als Bargraph ausgebildeten Pfeilsymbol (12) mit Entfernungsbereichsunterteilung in Form von Balken entsprechen den Bereichen des Bereichsumschalters, die der Empfangsfeldstärke entsprechen, wobei die beim Orten empfangene maximale Feldstärke gespeichert und zusätzlich als Feldlinienlänge digital angezeigt wird und beim Verlassen der Richtung maximaler Feldstärke erlischt,
mit einem Richtungsneuorientierungssymbol (21), das so lange angezeigt wird, bis die maximale Feldstärke wieder empfangen wird, und
mit einem Bereichsumschaltungssymbol (22), das angezeigt wird, wenn ein Balken der Entfernungsbereichsunterteilung des Pfeilsymbols (12) überschritten wird, und eine Umschaltung des Bereichsumschalters (16) erforderlich ist.

2. Gerät nach Anspruch 1,
**dadurch gekennzeichnet, daß**
bei Verlassen der Richtung maximaler Feldstärke die Lautstärke des akustischen Signals abnimmt.

3. Gerät nach Anspruch 1 oder 2,
**dadurch gekennzeichnet, daß**
die Amplitude der maximalen Feldstärke über eine bestimmte Zeitperiode, vorzugsweise einige Minuten, gespeichert, jedoch sofort geändert wird, wenn eine größere Amplitude gemessen wird.

4. Gerät nach Anspruch 3,
**dadurch gekennzeichnet, daß**
bei Ausschalten des Gerätes oder beim Umschalten auf Sendebetrieb die vorherige Amplitude der maximalen Feldstärke gelöscht wird.

5. Gerät nach einem der Ansprüche 1 bis 3,
**dadurch gekennzeichnet, daß**
beim Zurückschalten auf einen niedrigeren Bereich des Bereichsumschalters (16) die Amplitude der maximalen Feldstärke gelöscht und gleichzeitig das Richtungsneuorientierungssymbol (21) angezeigt wird.

6. Gerät nach einem der Ansprüche 1 bis 5,
**dadurch gekennzeichnet, daß**
beim Umschalten von Sende- auf Empfangsbetrieb ein Symbol (23) für Grobsuche angezeigt wird.

7. Gerät nach einem der Ansprüche 1 bis 6,
**dadurch gekennzeichnet, daß**
beim Umschalten auf Empfangsbetrieb das Bereichsumschaltsymbol (22) angezeigt wird, falls sich der Bereichsumschalter (16) nicht in der Startposition befindet.

8. Gerät nach einem der Ansprüche 1 bis 7,
**dadurch gekennzeichnet, daß**
bei Empfangsbetrieb am Beginn der Ortung die maximale Entfernung und das Bargraph-Pfeilsymbol (12) ohne Balken leer angezeigt werden.

9. Gerät nach einem der Ansprüche 1 bis 8,
**dadurch gekennzeichnet, daß**
bei Verlassen der Richtung maximaler Feldstärke das Bargraph-Pfeilsymbol (12) auf dem bereits erreichten Entfernungsbereich gehalten wird.

10. Gerät nach einem der Ansprüche 1 bis 9,
**dadurch gekennzeichnet, daß**
bei Anzeige eines der Symbole gleichzeitig eine Alarmleuchte (14) aufleuchtet.

11. Gerät nach einem der Ansprüche 1 bis 10,
**dadurch gekennzeichnet, daß**
zusätzlich zum einen Gurtstecker (18) an einem Gurtende zum automatischen Einschalten des Sendebetriebs am anderen Gurtende ein Stecker (19) vorgesehen ist, durch den beim Lösen automatisch auf Empfangsbetrieb umgeschalten wird.

12. Nach Anspruch 11,
**dadurch gekennzeichnet, daß**
der Stecker für Empfangsbetrieb (19) mit einer am Gerät befindlichen Taste (17) zum Umschalten auf Sendebetrieb kombiniert ist.

13. Gerät nach Anspruch 12,
**gekennzeichnet durch**
einen manuell betätigbaren Auslösemechanismus (25) zum Umschalten auf Empfangsbetrieb, wenn beide Gurtendenstecker (18, 19) gelöst sind.

14. Gerät nach einem der Ansprüche 1 bis 13,
**gekennzeichnet durch**
einen manuell betätigbaren Verriegelungsmechanismus (20) zum Lösen des für die Umschaltung auf Sendebetrieb vorgesehenen Gurtsteckers.

15. Nach einem der Ansprüche 1 bis 14,
**dadurch gekennzeichnet, daß**
das Display (11) ein LC-Display ist, und daß die Symbole (12, 21, 22, 23, 24) mittels LCDs angezeigt werden.

16. Nach einem der Ansprüche 1 bis 15,
**dadurch gekennzeichnet, daß**
das Gerät auf einer Platte drehbar montiert und mittels eines Motors in Abhängigkeit von der maximalen Empfangsfeldstärke drehbar ist.

17. Nach Anspruch 16,
**dadurch gekennzeichnet, daß**
die Bereichsumschaltung automatisch in Abhängigkeit von der maximalen Empfangsfeldstärke erfolgt und angezeigt wird.

18. Nach einem der Ansprüche 1 bis 17,
**gekennzeichnet durch**
eine Schultergurtschlaufe, in der den Gurtstecker (19) aufweisenden Gurthälfte.
